Europäisches Patentamt

**European Patent Office**

Office européen des brevets

(19)

(11) Publication number: **0 063 448**

**A1**

(12) # EUROPEAN PATENT APPLICATION

(21) Application number: **82301820.5**

(22) Date of filing: **06.04.82**

(51) Int. Cl.³: **B 01 D 3/38**

(30) Priority: **22.04.81 GB 8112406**

(43) Date of publication of application:
**27.10.82 Bulletin 82/43**

(84) Designated Contracting States:
**BE DE FR GB IT NL**

(71) Applicant: **Exxon Research and Engineering Company**
**P.O.Box 390 180 Park Avenue**
**Florham Park New Jersey 07932(US)**

(72) Inventor: **Pfeifer, Klaus Arno**
**St. Barbara Strasse 42**
**D-7517 Waldebronn (1)(DE)**

(74) Representative: **Field, Roger Norton et al,**
**ESSO Engineering (Europe) Ltd. Patents & Licences**
**Apex Tower High Street**
**New Malden Surrey KT3 4DJ(GB)**

(54) **Distillation column with vapour stripping.**

(57) A distillation column houses a separator (16) having a vapour inlet (18), a vapour outlet (19) and a distributor (20), the separator (16) being located beneath the trays (1-4) of the column. The vapour outlet (19) is directed towards the tray (1) and the distributor (20) is located so as to prevent liquid dripping from a tray (1) onto the vapour outlet (19). The separator (16) separates and collects stripping vapour condensate from the stripping vapour supplied to the column, thereby avoiding or at least minimising the risk of internal eruptions caused by instantaneous vaporisation of condensate entrained through the distributor (20) to the hot bottoms product in the column. Heat transfer within the column to the condensate collected in the separator (16) increases the rate of revapourisation of that condensate, thereby reducing or obviating the need for periodic draining off of condensate.

FIG. 2.

EP 0 063 448 A1

Croydon Printing Company Ltd.

## DISTILLATION COLUMN WITH VAPOUR STRIPPING

This invention relates to a distillation column employing stripping with an inert gas, such as steam.

Normally the stripping steam to a pipestill or a vacuum pipestill or generally to a distillation tower is provided by using a perforated pipe distributor. This distributor usually comprises a piece of pipe which extends horizontally through the bottom section of the tower. One end is connected to the supply of steam and the other end is closed. Holes are provided in the lower surface of the pipe so that the stripping steam is projected downwards in the space below the stripping trays. The holes are located at the bottom part of the distributor pipe to prevent vapour condensate from accumulating in the distributor during start-up or shut-down operations and to establish a uniform stripping gas flow to the first tray of the distillation tower.

Frequently damage to trays is experienced, especially during the start-up of the tower system when condensate from the steam system is entrained through the distributor to the hot bottoms product, causing an internal eruption by instantaneous vaporisation of the condensate. This eruption or even explosion is caused by atomisation of the condensate by the steam leaving the distributor holes and coming into contact with the hot liquid in the bottom of the tower. The condensate vaporises substantially instantaneously forming large volumes of steam in a very short time because of the very large heat transfer surface. Very often as a result, all stripping trays and sometimes also trays above the flashzone are destroyed leading to high repair and non-utilisation cost of the tower system.

We have now devised an improved distributor which substantially eliminates the danger of damaging the trays by separating out substantially all the entrained steam condensate from the stripping steam flow before it is distributed inside the tower.

Accordingly this invention provides a distillation column provided with means for supplying stripping vapour to the column having a distributor for distributing the vapour within a region in the column so that when the column is in use, the vapour passes upwardly from said region and through the region where the tray or trays of the column are located. The invention is characterised by a separator which is positioned inside the column and connected in the supply means for separating and collecting stripping vapour condensate from the stripping vapour supplied to the column.

Thus, damage to the tray or trays is substantially eliminated because most or all of any entrained condensate is separated from the supplied stripping steam and collected before it can be distributed inside the column, but the elevated temperature within the column increases the rate of revapourisation of the collected condensate which in turn eliminates altogether, or at least extends, the intervals at which excess collected condensate needs to be drained off.

The separator can be so positioned within the distillation column as to be entirely within the vapour region above the hot bottoms liquid, but better heat transfer to the condensate in the separator can be obtained when the lower portion of the separator is immersed in the bottoms liquid.

The distillation column wherein trays are necessary can be of different forms. Thus, it can be a vacuum pipestill or a distillation tower, or any other vapour/liquid contacting processes where steam is applied to a hot tower system, "hot" being defined as a temperature which is higher than the vaporisation temperature of the steam condensate at the given pressure.

Although the vapour used in the process can be any gas which condenses at some stage in the process, e.g. low boiling hydrocarbons, nearly always the vapour will be steam.

Usually the column will have a plurality of perforated or other vapour/liquid contacting trays, e.g. at least four, and these are usually spaced fairly regularly throughout the column (but leaving a space beneath the lowest tray for the separator), their planes usually being substantially horizontal when the column is vertical.

The separator is preferably a relatively small upright cylinder with a rounded top and a rounded bottom. Another form of separator could be a horizontal drum.

The vapour inlet is preferably a pipe which passes through a side wall of the column and which leads into the upper part of the separator. Preferably this inlet is tangential to the side wall of the cylindrical separator. In this manner the vapour, e.g. steam, is separated from condensed vapour, e.g. water, by centrifugal force. However less desirably the inlet could meet the cylindrical separator radially.

Condensed vapour collects in the bottom of the separator which is preferably provided with a drain for the condensed vapour. This can be a pipe having a tap or valve therein.

The vapour outlet is preferably a short conduit directed upwards from the centre of the top of the separator. Preferably the orifice through which the vapour emerges from the separator is of restricted size.

There is also a distributor for distributing the stripping medium, e.g. a baffle, and this is located so as to prevent liquid dropping from a tray onto the vapour outlet. A preferred baffle is a conically-shaped disc fitted a short distance above the upper end of the vapour outlet. However a simple flat disc could be used as a baffle. The baffle also preferably promotes the distribution of vapour. As an alternative to a baffle the vapour outlet can be attached at right angles to a pipe with closed ends but having perforations facing away from the trays. As another alternative this pipe attached at right angles can have its two ends turned downwards away from the trays.

**0063448**

The bottom portion of the separator is in general designed to be of a size and shape so that vaporisation of condensed vapour in the separator is at a so that vaporisation of condensed vapour in the separator is at a controlled rate, i.e. there is no sudden and violent vaporisation of condensate. With the separator located in the lower part of the distillation column so that the lower portion of the separator is preferentially immersed in liquid collecting in the bottom of the distillation column, there should be a controlled vaporisation of condensate in the separator because the heat transfer surface is limited to the available surface of the separator.

It is desirable that the size of the separator meets two criteria:

(i) The lower part of the separator where condensate collects should be of a size so as to hold an amount of condensate equivalent to 40 to 60, e.g. about 50, feet (1200 to 1800 e.g. about 1500 cm) length of the feeding stripping steam line.

(ii) The critical velocity at which steam is evolved should not be exceeded so as to prevent carrying over liquid droplets with the steam leaving the separator. To reduce the critical velocity the diameter could be increased. However to keep the diameter small the orifice of the vapour outlet should be small thereby increasing the vapour pressure in the separator. In the case of vacuum pipestills this provision of a small orifice is especially advantageous so as to allow draining of the separator to the atmosphere during start-up or shut-down operation of the tower.

Although in discussing these two criteria we have referred to steam it should be understood that the same considerations apply where other condensate gases are used.

When the size of the separator meets these criteria the vaporisation of condensed vapour should be at a controlled rate, by which term we mean that the total rate at which vapour, e.g. steam, leaves the separator is no more than twice the normal stripping vapour rate. The total vapour rate, e.g. total steam rate, means the normal stripping vapour rate plus the vapour rate generated by vaporisation of the condensate in the separator. Provided the total vapour rate is no more than twice the normal stripping vapour rate there is normally no danger to the trays. With the type of separator described in this specification maximum total vapour rates up to 120% of the normal stripping vapour rates can be expected which are well below the danger level of 200%.

The invention is now described, by way of example, with reference to the drawings in which:

Fig 1   for comparison, shows a distillation column having a conventional stripping steam distributor;

Fig 2   shows a distillation column according to the invention;

Fig 3   shows the separator which is located within the column of Fig 2;

Fig 4   shows a transverse section along line 4-4 of the top of the separator of Fig 3;

Fig 5   shows alternative forms of distributor to that shown in Fig 3; and

Fig 6   shows alternative forms of baffle to that shown in Fig 3.

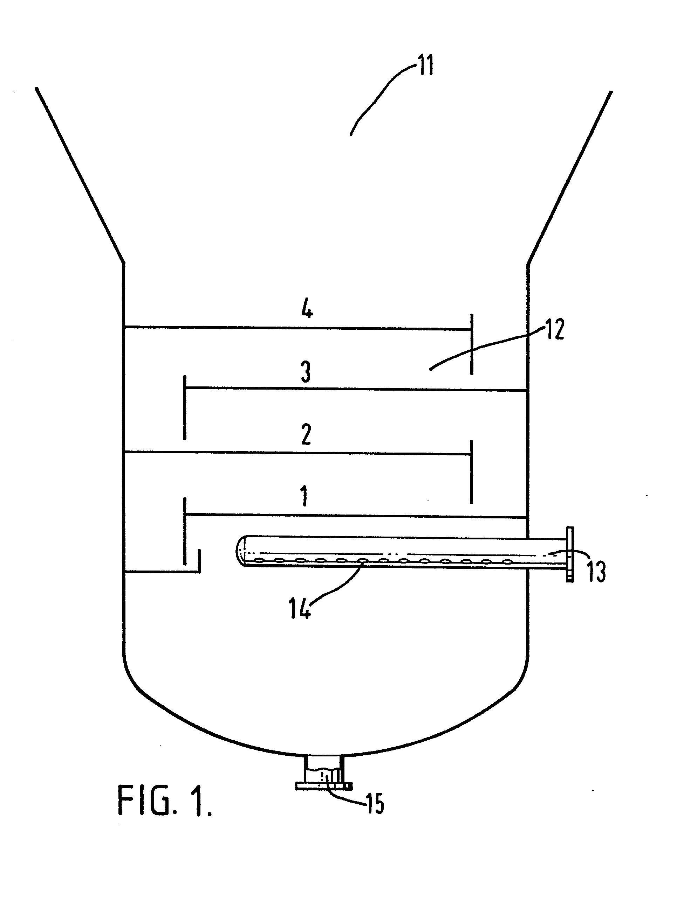

Referring to Fig 1 four trays 1,2,3 and 4 are located within the bottoms stripper 12, above which is the flash zone 11. Beneath the bottom tray 1 is a steam stripping inlet 13 leading to a perforated pipe distributor 14. Finally there is a bottoms product outlet 15.

It can be seen that there is a considerable danger during start-up operations that condensate i.e. condensed steam, will drop onto the hot bottoms product causing an internal eruption or even explosion by instantaneous vaporisation of the condensate. Due to the large amounts of steam thereby caused there will often be considerable damage to the trays located above the pipe distributor.

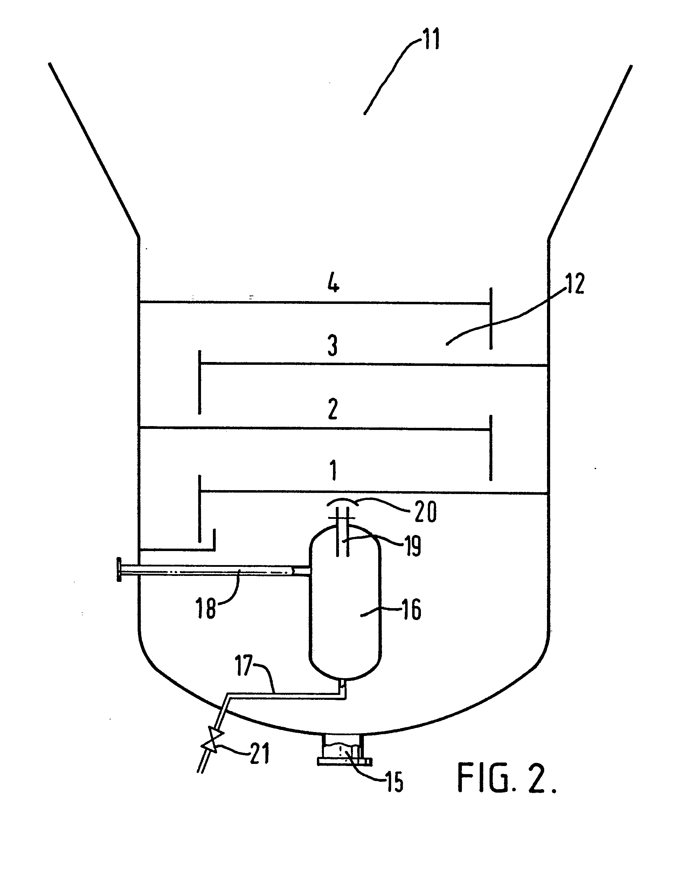

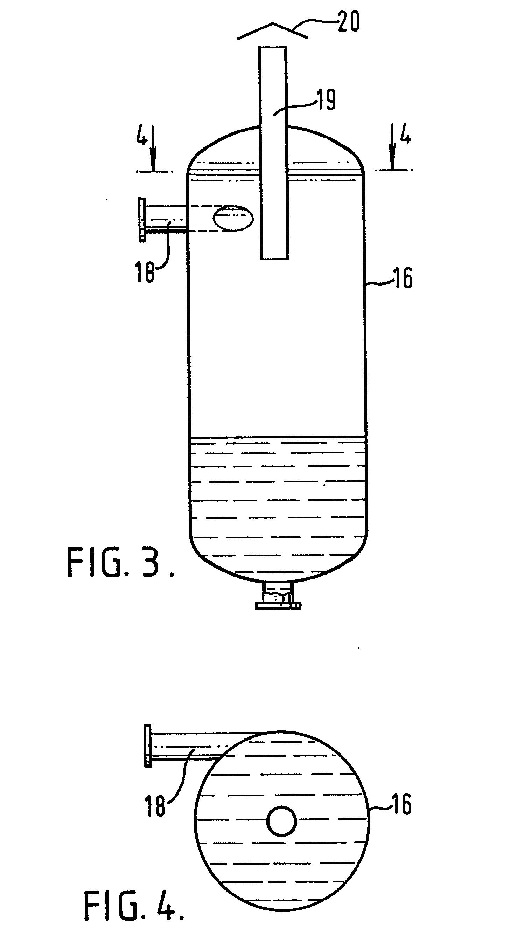

Referring now to Fig 2 where a distillation column of the invention is shown as with Fig 1 there is a flash zone 11 below which are four perforated trays 1,2,3 and 4 located in the bottoms stripper 12 also having a bottoms outlet 15. Located beneath tray 1 is a steam condensate collector and vaporiser (separator) 16. This vessel 16 as can best be seen from Fig 3 and 4 has a tangential inlet 18 and steam outlet 19 which is surmounted by a baffle 20. Vessel 16 also has a liquid outlet 17 provided with a valve 21.

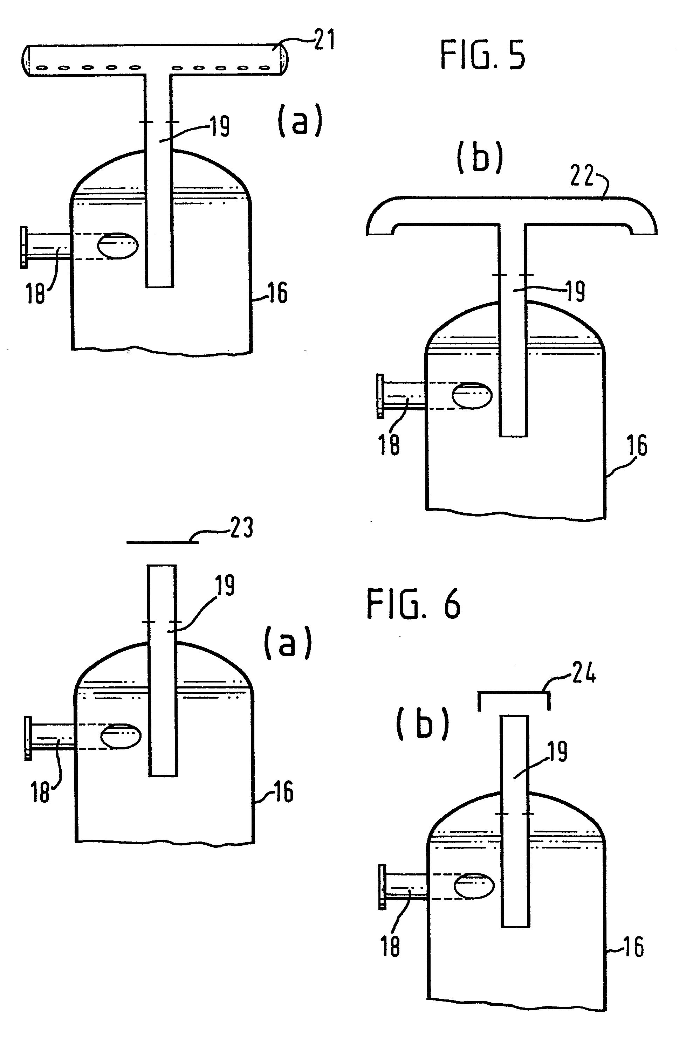

Referring to Fig 5(a) the steam outlet 19 leads to a substantially horizontal pipe 21 closed at both ends. This pipe 21 has a series of holes pointing downward so that no liquid dripping from a tray can enter the steam outlet 19. In Fig 5(b) the distributor is also a pipe 22 but in this case its ends are turned downwards and once again liquid dripping from a tray cannot enter the steam outlet 19.

Referring to Fig 6(a) the baffle is a circular plate 23 and in Fig 6(a) the baffle is also a circular plate 24 but with its periphery turned downward. It can be seen that plates 23 and 24 are suitable alternatives to the baffle 20 shown in Fig 4.

CLAIMS

1.  A distillation column provided with means for supplying stripping vapour to the column having a distributor for distributing the vapour within a region in the column so that when the column is in use, the vapour passes upwardly from said region and through the region where the tray or trays of the column are located, characterised by a separator (16) which is positioned inside the column and connected in the supply means (18, 19) for separating and collecting stripping vapour condensate from the stripping vapour supplied to the column.

2.  A column according to claim 1, characterised in that it comprises a vacuum pipestill.

3.  A column according to either of claims 1 and 2, characterised in that it comprises at least four trays.(1-4).

4.  A column according to any one of the preceding claims, characterised in that the trays (1-4) are perforated.

5.  A column according to any one of the preceding claims, characterised in that the separator (16) comprises an upright cylinder with a rounded top and a rounded bottom.

6.  A column according to any one of the preceding claims, characterised in that the separator (16) has a vapour inlet (18) which is a pipe tangential to the side wall thereof and leading to the upper part of the separator, and a vapour outlet (19) leading to the distributor (20:21:22:23:24).

- 9 -

0063448

7. A column according to any one of the preceding claims, characterised in that the separator (16) has a vapour inlet (18) and also a vapour outlet (19) which is a short conduit directed upwards from the centre of the top of the separator and leading to the distributor (20:21:22:23:24).

8. A column according to any one of the preceding claims, characterised in that the orifice through which vapour emerges from the separator (16) is of restricted size.

9. A column according to any one of the preceding claims, characterised in that the distributor comprises a baffle (20:23:24).

10. A column according to claim 9 as appended to claim 7, characterised in that the baffle comprises a conically-shaped disc fitted above the upper end of the vapour outlet.

11. A distillation column according to any preceding claim, characterised in that the separator (16) is so positioned within the column that when the column is in use, the lower portion of the separator (16) is immersed in the hot bottoms liquid in the column for revaporising condensate collected in the separator.

12. A distillation column according to any preceding claim, characterised in that the separator (16) has a liquid outlet pipe (17) provided with a central valve (21) for draining off condensate collected in the separator.

FIG. 1.

0063448

FIG. 2.

FIG. 3.

FIG. 4.

FIG. 5

(a)

(b)

FIG. 6

(a)

(b)

# 0063448

**European Patent Office**

## EUROPEAN SEARCH REPORT

EP 82 30 1820

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. ³) |
| A | GB-A-2 012 176 (EXXON) ----- | | B 01 D 3/38 |
| | | | TECHNICAL FIELDS SEARCHED (Int. Cl. ³) |
| | | | B 01 D<br>C 10 G<br>C 07 C |

The present search report has been drawn up for all claims

| Place of search | Date of completion of the search | Examiner |
|---|---|---|
| THE HAGUE | 22-06-1982 | VAN BELLEGHEM W.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82